# EUROPEAN PATENT SPECIFICATION

(11) **EP 4 532 925 B1**
(45) Date of publication and mention of the grant of the patent: **04.03.2026**
(21) Application number: 23729294.1
(22) Date of filing: 23.05.2023
(51) Int. Cl.: F03D 1/06

(54) **WIND TURBINE BLADE**
WINDTURBINENROTORBLATT
PALE D'ÉOLIENNE

(30) Priority: 24.05.2022 DK PA202270274
(43) Date of publication of application: 09.04.2025
(73) Proprietor: VESTAS WIND SYSTEMS A/S, 8200 Aarhus N (DK)
(72) Inventor: RANDALL, Stephen, 8200 Aarhus N (DK)
(74) Representative: Vestas Patents Department
(86) International application number: PCT/DK2023/050126
(87) International publication number: WO 2023/227181

(56) References cited:
- EP-A1- 2 677 170
- US-A1- 2012 148 404
- US-A1- 2017 138 342

## Description

### TECHNICAL FIELD

The present disclosure relates to a wind turbine and to an assembly for a wind turbine, the assembly comprising a wind turbine blade and a pitch bearing.

### BACKGROUND

Wind turbine blades for large horizontal axis wind turbines have significant mass, perhaps in the region of 10 tonnes or more, up to 30 tonnes or more. Wind turbine blades are fastened to a pitch bearing of a hub to make up a rotor which rotates on a main shaft to drive a generator.

A blade is typically connected to the inner or outer ring of the pitch bearing using a plurality of circumferentially spaced bolts which extend into a root end of the blade in a direction parallel to a central axis of the root end of the blade. The stresses on the blade connection to the pitch bearing are considerable, owing chiefly to blade mass and wind force, as well as the effect of perpetual rotation of the rotor, which tends to vary the degree and direction of the forces on the blade with every rotation of the rotor. Vibrations in the system can also be considerable.

With an expected lifetime of 20 years or more, the fatigue performance of the blade connection to the pitch bearing is critical. The bolts are typically connected to the blade root via threaded metal bushings embedded into the fibre composite material of the root end of the blade. Such bushings are usually cylindrical, often made of steel. The bushings transfer the loads from the composite materials of the blade to the bolts which then transfer the loads to the hub via the pitch bearing.

Considering the load bearing and fatigue requirements placed on the blade connection to the pitch bearing, the manner of connecting the blade root to the pitch bearing is critical. However, in known methods of attachment the component parts are not used in an optimal way resulting in over engineering and the use of large safety factors. For example, the bushings described above are typically held in place by adhesive which, in use, is subject to constantly varying tensile forces. It is well known that adhesives are not optimally suited to such conditions. Similarly, the bolts connecting the pitch bearing to the blade bear tensile and bending loads rather than shear loads to which they are better suited.

It is desirable to increase the length of wind turbine blades so that each wind turbine can extract more energy from the wind to help reduce our reliance on fossil fuels. However, the current method of blade/hub connection described above limits the extent to which this can be achieved.

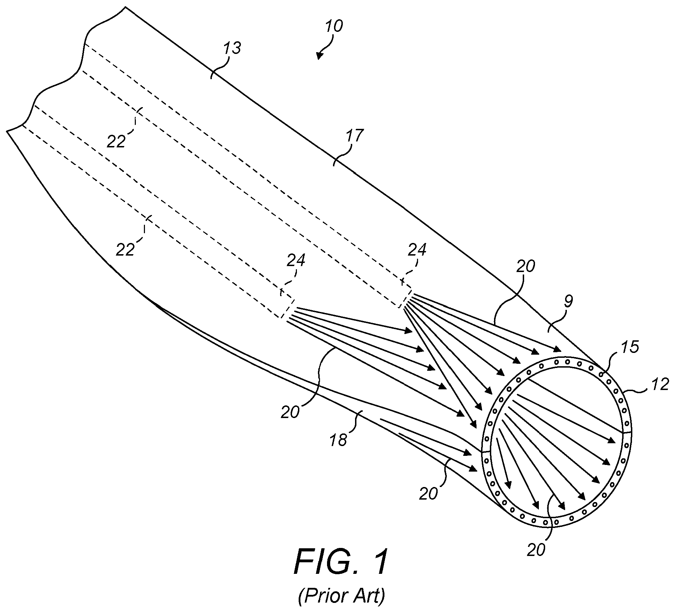

Figure 1 shows a schematic view of a prior art wind turbine blade construction. The wind turbine blade 10 shown in Figure 1 comprises a blade shell 13 which is made up of windward 17 and leeward 18 half-shells which are connected together to form the blade shell 13. Both half-shells comprise a glass fibre composite root 9 with the remainder of the half shells 17, 18 being made up of balsa wood and/or polyurethane foam core material which is adhered to a glass fibre composite skin.

Each half-shell 17, 18 comprises one or more spanwise extending beams or spar caps 22 to provide bending strength to the wind turbine blade 10. The spar caps 22 typically comprise carbon fibre composite due to its lightweight and stiff material properties. Shear webs (not shown) extend between opposing spar caps 22 on the windward 17 and leeward 18 sides of the blade shell 13 and may be made of glass fibre composite. The shear webs bear the shear loads of the wind turbine blade 10.

The majority of the loads carried by the wind turbine blade 10 are carried in substantially straight load paths by the spar caps 22. These loads must be transferred to the wind turbine hub via the root 9 and the pitch bearing. The root 9 is attached to the pitch bearing by a plurality of circumferentially spaced bolts 15 located in a ring around the root end 12 of the root 9. To avoid undesirable load peaks which may cause material failure, it is necessary to gradually spread the loads from the spar caps 22 around the full circumference of the root end 12. To achieve this, a large amount of glass fibre composite is required in the region between the ends 24 of the spar caps 22 and the root end 12. In addition, the ends 24 of the spar caps 22 must be positioned at a sufficient spanwise distance away from the root end 12 so that the loads can be sufficiently distributed around the full circumference of the root end 12. This is illustrated schematically in Figure 1 by load lines 20.

US2012/148404 described an attachment between a wind turbine blade and a hub with a transverse pin. EP2677170 describes a blade root forming piece for a wind turbine blade with an embedded metal part. US2017/138342 describes a wind turbine rotor blade connection having a flange coupling.

It is desirable to increase the amount of load that the root of a wind turbine blade is able to carry. However, current methods of wind turbine blade design and construction limit the extent to which this can be achieved.

It is against this background that the present invention has been developed.

### SUMMARY OF THE INVENTION

The present invention provides an assembly for a wind turbine according to claim 1.

The assembly of the invention provides a number of advantages over the prior art. In particular, the strength and stiffness of the root may be tuned for specific applications by modification of the dimensions and profiles of the metal sheets and/or the number of metal sheets. Wind turbine blades having roots of different capacities may therefore be designed and made without needing to change the overall dimensions of the root. This is beneficial for the purposes of standardisation and overcoming design limitations imposed by road transport considerations (such as the height of bridges).

In addition, because the metal section of the root is considerably stiffer than the glass fibre roots of the prior art, the spanwise innermost ends of the carbon fibre spar caps within the blade shell may be positioned closer to the root than is possible in the prior art. Thus the stiffness of the entire wind turbine blade may be increased as the carbon fibre spar caps are able to extend closer to the stiffer root. The metal section of the root is capable of bearing higher peak loads than is possible with the glass fibre roots of the prior art meaning that less glass can be used in the construction of the root providing both cost and environmental benefits.

Optionally the cross-sectional area of the metal section in a direction normal to a spanwise extending axis of the metal section comprises at least 90% metal to allow for preloads (for example of bolts, if used) to be created and sustained throughout the operational life of the wind turbine blade. Preferably the cross-sectional area of the metal section in a direction normal to a spanwise extending axis of the metal section comprises at least 95% metal, more preferably at least 98% metal, and most preferably at least 99% metal.

The one or more metal sheets are optionally thin in relation to their spanwise dimension in a direction parallel to the spanwise extending axis of the metal section such that the thickness of the one or more metal sheets is no greater than 25% of the spanwise dimension, preferably no greater than 10% of the spanwise dimension, more preferably no greater than 5% of the spanwise dimension, still more preferably or no greater than 1% of the spanwise dimension, and most preferably no greater than 0.1% of the spanwise dimension. The use of thin metal sheets is beneficial in manufacture as they may be more readily formed and manipulated.

The portion of the one or more metal sheets located in the transition section may taper towards the fibre composite section to help reduce stress concentrators caused by material discontinuities.

In one example the portion of the one or more metal sheets located in the transition section comprises a plurality of radially extending formations with respect to the spanwise extending axis of the metal section. Such radial formations are beneficial as they help to improve the integrity of the connection between the fibre composite material metal sheets or sheets.

Optionally the radially extending formations comprise a plurality of projections located on the surface of the portion of the one or more metal sheets located in the transition section. Such projections help to anchor the fibre composite material to the metal sheet or sheets.

The metal section optionally comprises a continuous spiral of metal sheet material curved to form a plurality of layers of metal sheet material. By using a continuous spiral of metal sheet material multiple layers of metal sheets can be formed readily.

The metal section may comprise a plurality of layers of metal sheets arranged one on top of another. Such an arrangement is beneficial as the number, and surface area, of metal to fibre composite interfaces increases with the number of layers of metal sheet thereby providing a stronger connection between the metal section and the fibre composite section. The number of layers of metal sheets may be selected depending on the intended use and size of the wind turbine blade.

In one example each layer of metal sheet comprises formations which engage with complementary formations located on an adjacent layer of metal sheet. Such formations are advantageous as they increase friction between layers and may also provide an interlocking function depending on the configuration of the formations.

Optionally a portion of some or all of the layers of metal sheet extend beyond the metal section into the transition section so that some layers may end at the intersection of the metal section and the transition section, while other layers extend from the metal section into the transition section thereby providing greater design choice for optimisation of the blade construction depending on its use requirements.

Each portion of the layers of metal sheet which extend into the transition section optionally extend into the transition section by the same amount, or optionally extend into the transition section by an amount different to a neighbouring portion of metal sheet thereby providing tunabilty for optimisation of blade design.

In one example the fibre composite section tapers towards the distal end of the tubular root portion to facilitate integration of the root portion into the wind turbine blade by provision of spanwise extending surfaces for fibre composite to fibre composite interfaces, and reduction of geometric stress raisers.

Optionally the wind turbine blade comprises a plurality of bolt holes which extend radially with respect to the spanwise extending axis of the metal section through the metal section from an inner circumferential surface of the metal section to an outer circumferential surface of the metal section. The metal section of the root facilitates use of radially extending bolts, rather than spanwise extending bolts. This is beneficial as radially extending bolts are able to bear loads in shear rather than in tension and bending.

The inner and outer circumferential surfaces of the metal section are surfaces which extend in the spanwise direction.

Connection of circumferential surfaces of the metal section and a ring of the pitch bearing is advantageous as the surface area of the interface may be greater than is possible with the butted connection of the prior art thereby allowing greater distribution of loads and reducing load peaks. Such a connection also allows loads to be transferred in shear in addition to tension and bending.

The circumferential surfaces of inner and outer rings are surfaces which extend in the spanwise direction.

Optionally the inner or outer ring comprises an annular groove within which the metal section is received. In a further option, the inner or outer ring, whether or not it comprises an annular groove, may comprise one or more parts connected together. Each option is beneficial for design optimisation and construction purposes.

The metal section may optionally be connected to the inner or outer ring by a friction connection which may be a shrink fit connection. Such connections may be used alone or in addition to a bolted connection.

In one example the assembly comprises a plurality of bolts which extend through the metal section into the inner or outer ring. Optionally the bolts extend radially with respect to the spanwise extending axis of the metal section.

The circumferential surface of the inner or outer ring may comprise surface formations which engage with complementary surface formations located on the circumferential surface of the metal section. Such formations are beneficial as they increase friction between the ring and the metal section and may also provide an interlocking function depending on the configuration of the surface formations.

In one example the inner or outer ring comprises a proximal end defining a hubwards end of the ring, and a distal end located at a spanwise distance from the proximal end, wherein the ring comprises: a hubwards section which extends from the proximal end of the ring towards the distal end of the ring; and a bladewards section which extends from the distal end of the ring towards the proximal end of the ring; wherein the circumferential surface of the ring in contact with the circumferential surface of the metal section is located entirely in the bladewards section of the ring, and wherein the hubwards section of the ring is configured to operably engage the inner or outer ring of a pitch bearing. In this way the loads passing from the blade to the ring may be at least partially dissociated from the loads passing from the ring to the hub via the bearing elements (e.g. spherical rollers) and the other ring of the pith bearing.

In a further aspect, the present invention provides a wind turbine according to claim 23.

### BRIEF DESCRIPTION OF THE DRAWINGS

Examples of the invention are described below with reference to the accompanying drawings in which:
Figure 1 shows a schematic view of part of a prior art wind turbine blade construction;
Figure 2 shows a schematic view of a wind turbine;
Figure 3 shows a schematic view of a wind turbine blade;
Figure 4 shows a schematic cross-sectional view of a root end of a wind turbine blade attached to the inner ring of a pitch bearing;
Figure 5 shows a schematic partial cross-sectional view of an alternative root end construction attached to the outer ring of a pitch bearing;
Figure 6 shows a schematic partial cross-sectional view of a further alternative root end construction;
Figures 7a to 7c show schematic partial cross-sectional views of further alternative root end constructions attached to alternative examples of pitch bearings;
Figure 8 shows a schematic view of part of a wind turbine blade construction;
Figure 9a shows a schematic isometric view of a manufacturing method for a root of a wind turbine blade;
Figure 9b shows a schematic cross-sectional view of the manufacturing method of Figure 9a;
Figure 9c shows a schematic cross-sectional view of a layer of sheet metal material for use in the manufacturing method of Figure 9a; and
Figure 10 shows a schematic partial cross-sectional view of a root of a wind turbine blade.

### DETAILED DESCRIPTION

The following detailed description refers to the accompanying drawings that show, by way of illustration, specific details and examples in which the invention may be practiced. These examples are described in sufficient detail to enable those of ordinary skill in the art to practice the invention. Other examples may be utilised, and structural changes may be made without departing from the scope of the invention as defined in the appended claims.

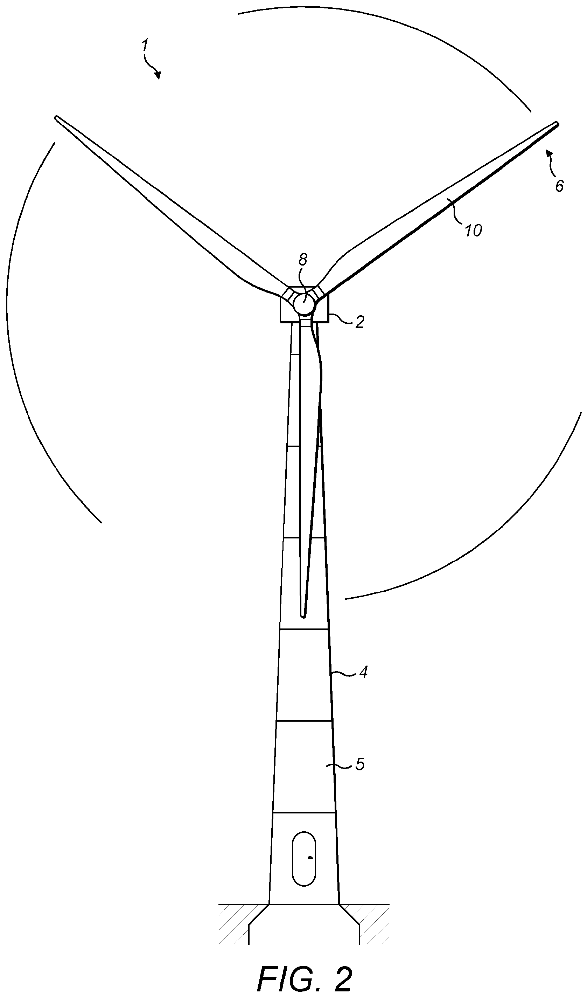

Figure 2 shows a wind turbine 1. The wind turbine 1 includes a nacelle 2 that is supported on a generally vertical tower 4, which itself comprises a plurality of tower sections 5. The nacelle 2 houses a number of functional components, including a gearbox and a generator (not shown), and supports a main rotor arrangement 6. The main rotor arrangement 6 comprises a hub 8 and a plurality of wind turbine blades 10 connected to the hub 8. In this example, the wind turbine 1 comprises three wind turbine blades 10.

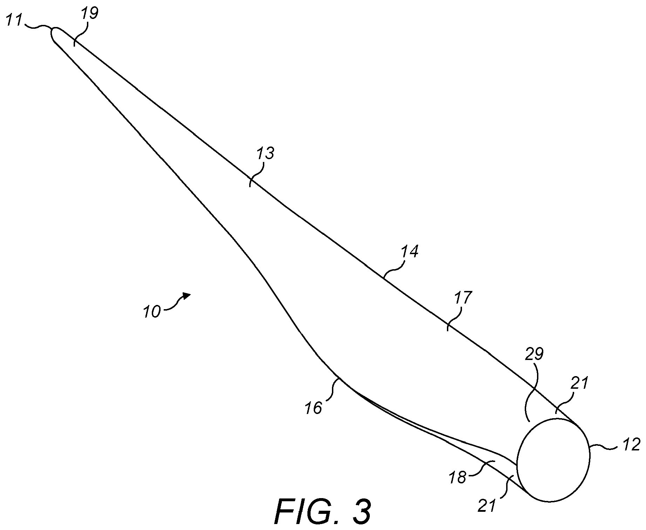

Figure 3 shows a schematic view of a wind turbine blade 10. The wind turbine blade 10 comprises a blade shell 13 made up of a windward half-shell 17 attached to a leeward half-shell 18. The wind turbine blade 10 extends from a root end 12 to a tip end 11 and each half-shell 17, 18 has a tip end 19 and a hubwards end 21. The root end 12 is configured for attachment to the hub 8. A leading edge 14 and a trailing edge 16 extend in a spanwise direction between the root end 12 and the tip end 11.

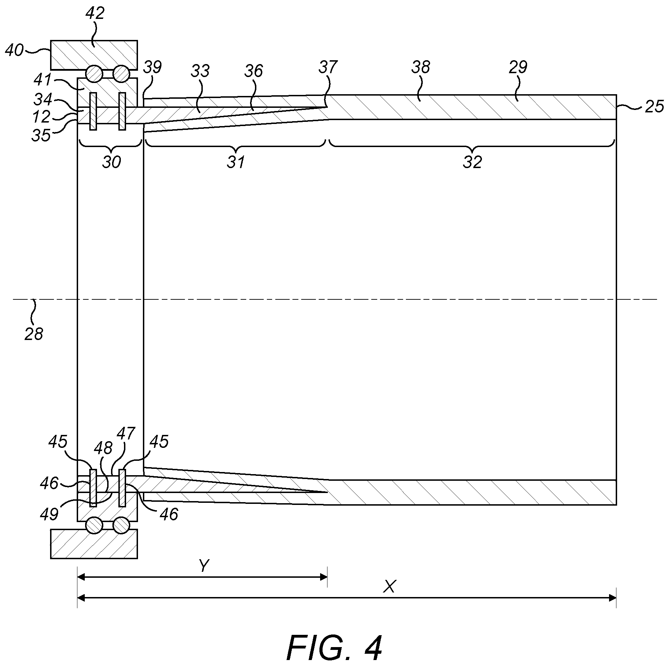

Figure 4 shows a schematic cross-sectional view of a root 29 of a wind turbine blade attached to the inner ring 41 of a pitch bearing 40. The root 29 comprises a tubular root portion having a proximal end 35 defining the root end 12 of the blade, and a distal end 25 located at a spanwise distance X from the proximal end 35.The root 29 comprises a metal section 30 which extends from the proximal end 35 of the root 29 towards the distal end 25 of the root 29, and a fibre composite section 32 which extends from the distal end 25 of the root 29 towards the proximal end 35 of the root 29. A transition section 31 extends between the metal section 30 and the fibre composite section 32.

The metal section 30 is defined by a first portion 34 of a metal sheet 33. A second portion 36 of the metal sheet 33 extends from the first portion 34 into the transition section 31 such that the metal sheet 33 extends from the proximal end 35 of the root 29 to an outermost spanwise end 37 of the transition section 31 located at a spanwise distance Y from the proximal end 35. The metal sheet 33 is curved about a spanwise axis 28 of the root 29 such that the metal sheet follows the circumferential curve of the root end 12.

The first portion 34 of the metal sheet 33 may have a constant thickness, and the second portion 36 may have a varying thickness which tapers away from the first (or constant thickness) portion 34 towards the outermost spanwise end 37 of the transition section 31.

The second portion 36 of the metal sheet 33 located in the transition section 31 is encapsulated within fibre composite material 38 which is continuous with the fibre composite material 38 of the fibre composite section 32. The thickness of the fibre composite material 38 in the transition section 31 varies along the length of the transition section 31 such that the total thickness of the fibre composite material 38 at the innermost spanwise end 39 of the transition section 31 is less than the total thickness of the fibre composite material 38 at the outermost spanwise end 37 of the transition section 31. Consequently, the least thickness of fibre composite material 38 in the transition section 31 is located proximate the thickest section of the metal sheet 33 in the transition section 31, and the greatest thickness of fibre composite material 38 in the transition section 31 is located proximate the thinnest section of the metal sheet 33 in the transition section 31. In this example, the thickness of the root 29 may remain constant from the innermost spanwise end 39 of the transition section 31 to the outermost spanwise end 37 of the transition section 31. In other examples, the thickness of the root 29 may vary from the innermost spanwise end 39 to the outermost spanwise end 37 of the transition section 31 depending on design choice.

It will be understood that the thickness of the fibre composite material 38 shown in Figure 4 is exaggerated for the sake of clarity and that the thickness of the transition section 31 along its spanwise extent may be largely the same as the first portion 34 of the metal sheet 33 forming the metal section 30. Nonetheless, it will also be understood that this is not essential and the relative thicknesses of the metal section 30, the transition section 31 and the fibre composite section 32 need not be the same depending on design choice.

The fibre composite material 38 is glass fibre composite which is a material commonly used in wind turbine blade manufacture. However, any suitable fibre composite material may be used. In one example the fibre material is pre-impregnated fibre material. In another example, the fibre material is dry fibre material which is infused with resin and cured to form the composite material 38.

The metal sheet 33 is thin relative to its spanwise dimension Y. For example, the thickness of the metal sheet 33 at the root end 35 may be 30mm and its spanwise dimension may be 650mm. Preferably the thickness of the metal sheet 33 is no more than 25% of its spanwise dimension. Preferably, the thickness of the metal sheet 33 is no greater than 10% of its spanwise dimension, more preferably no greater than 5% of its spanwise dimension, more preferably still no greater than 1% of its spanwise dimension, and most preferably no greater than 0.1% of its spanwise dimension. It is envisioned that the thickness of the metal sheet 33 at the root end 35 may be up to about 50mm, and its spanwise dimension may be up to about 1000mm. However, dimensions outside this range may be used provided that the thickness of the metal sheet 33 is no more than 25% of its spanwise dimension.

As will be described in greater detail below, the metal sheet 33 may be formed from a metal sheet which is wound around a mandrel to form a tubular structure. Alternatively, the metal sheet 33 may be one of a plurality of metal sheets 33 positioned side by side to form a tubular structure. In each case, the metal sheet or sheets may be connected together by any suitable method such as by welding or by interlocking formations located on the spanwise edges of the metal sheets. Alternatively, the metal sheet or sheets may be held in position by the fibre composite material 38 which encapsulates the varying thickness portion 36 of the metal sheet or sheets located in the transition section 31.

As shown in Figure 4, the metal section 30 comprises an outer circumferential surface 48 which is in contact with an inner circumferential surface 49 of the inner ring 41 of the pitch bearing 4. The metal section 30 comprises a plurality of bolt holes 46 which extend radially with respect to the spanwise extending axis 28 of the metal section 30 through the metal section 30 from an inner circumferential surface 47 of the metal section 30 to the outer circumferential surface 48. The metal section 30 may be connected to the inner ring 41 of the pitch bearing 40 by radially extending bolts 45 which extend through the bolt holes 46 and into the bearing ring 41. As such, the bolts 45 bear loads predominantly in shear rather than in tension and bending as in prior art connection methods.

In the example described with reference to Figure 4 the root 29 is connected to the inner ring 41 of the pitch bearing 40. It will be understood that this is not essential and that the root 29 may be connected to the outer ring 42 of the pitch bearing 40 in dependence on the particular pitch bearing design.

Four bolts 45 are shown in line with one another in the cross-sectional view of Figure 4. However, it will be understood that this is an example only and that only two bolts 45, or more than four bolts 45, may be present in any particular spanwise cross-section of the root 29. It will be understood that metal section 30 of the root 29 is connected to the inner ring 41 of the pitch bearing 40 by a plurality of bolts 45 spaced around the entire periphery of the metal section 30. A friction connection also exists between the outer circumferential surface 48 of the metal section 30 and the inner circumferential surface 49 of the inner ring 41. This friction connection is created by the tensile forces produced by the bolts 45 when they are tightened. Because the metal section 30 and the bolts 45 are made of elastic metal material, both the metal section 30 and the bolts 45 deform slightly on tightening of the bolts such that a residual force is created as a result of the elastic material of the metal section 30 and the bolts 45 trying to regain their original shape. This is known as 'preloading'. The preloading forces cause the inner ring 41 and the metal section 30 to be drawn tightly together generating a friction force between them. This friction force serves to robustly secure the metal section 30 of the root 29 to the inner ring 41. This is an important enabler for the successful design and use of larger length wind turbine blades than is possible with prior art connection methods.

In an alternative example, the metal section 30 may be fully or partially covered by the fibre composite material 38 such that the inner ring 41 of the pitch bearing 40 contacts the fibre composite material 38 and not the metal sheet material 33 of the metal section 30. In this case, the cross-sectional area of the metal section 30 in a direction normal to its spanwise extending axis 28 may comprise at least 90% metal to create and sustain the preloading of the bolts 45 throughout the operational life of the wind turbine blade 10. Preferably the cross-sectional area of the metal section 30 may comprise at least 95% metal, more preferably at least 98% metal, and most preferably at least 99% metal.

If the cross-sectional area of the metal section 30 comprises less than 90% metal, the connection method described above and shown in Figure 4 may still be used as the root 29 is still reliably secured to the inner race 41 by the bolts 45 predominantly bearing loads in shear.

In the example described above the root 29 may be connected to the inner 41 or outer 42 ring of the pitch bearing 40. It will be understood that the inner 41 or outer 42 ring may comprise one or more component parts connected together to form a complete ring 41, 42. For example, the pitch bearing ring 41, 42 may comprise a first portion connected to the root 29 in the same way as described with respect to Figure 4 and a second portion connected between the first portion and the remainder of the pitch bearing 40. The first and second portions of the pitch bearing ring 41, 42 may be connected to one another by any suitable method including by connection of circumferential surfaces in a manner similar to the connection between the root end 29 and the first portion of the inner 41 or outer 42 ring. Alternatively, the first portion may be connected to the second portion by spanwise extending stud bolts. The use of pitch bearing rings 41, 42 comprising two or more component parts connected together is contemplated and suitable for all of the examples described herein.

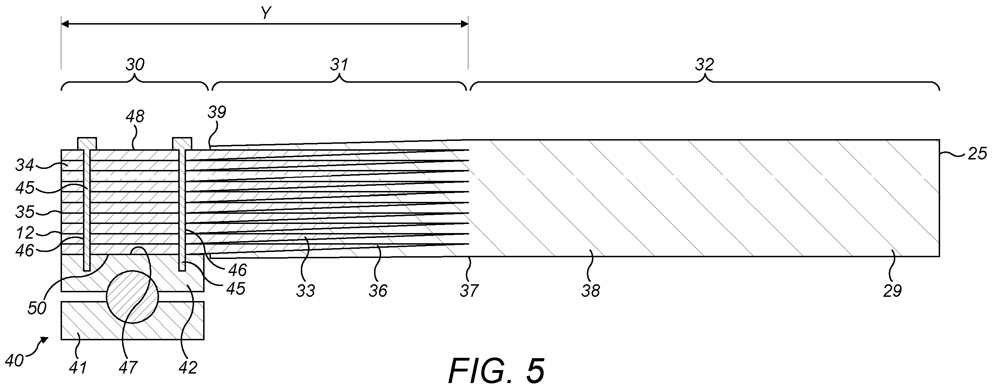

Figure 5 shows a schematic cross-sectional view of a root construction similar to the example of Figure 4 in which the metal sheet 33 is replaced by a plurality of metal sheets 33. As such, the example construction of Figure 5 is a preferred example of the example construction of Figure 4.

By way of example only, the root 29 of Figure 5 is attached to the outer ring 42 of the pitch bearing 40. It will be understood that in an alternative configuration the root 29 could be attached to the inner ring 41 of the pitch bearing 40. Note that like reference numerals have been used throughout this description to indicate like components.

The root 29 of Figure 5 is the same in all respects to the root 29 of Figure 4 except in that the root 29 of Figure 5 comprises a plurality of metal sheets 33 arranged one on top of the other. As such, the root 29 comprises a metal section 30 which extends from the proximal end 35 of the root 29 towards the distal end 25 of the root 29, and a fibre composite section 32 which extends from the distal end 25 of the root 29 towards the proximal end 35 of the root 29. A transition section 31 extends between the metal section 30 and the fibre composite section 32.

The metal section 30 is defined by first portions 34 of the metal sheets 33. The second portions 36 of the metal sheets 33 extend into the transition section 31 such that each metal sheet 33 extends from the proximal end 35 of the root 29 to the outermost spanwise end 37 of the transition section 31 located at a spanwise distance Y from the proximal end 35. The metal sheets 33 are curved about the spanwise axis of the root 29 such that the metal sheets follow the circumferential curve of the root end 12.

The first portions 34 of each of the metal sheets 33 may have a constant thickness, and each of the second portions 36 may have a varying thickness which tapers away from the constant thickness portions 34 towards the outermost spanwise end 37 of the transition section 31.

The second portions 36 of the metal sheets 33 located in the transition section 31 are encapsulated within fibre composite material 38 which is continuous with the fibre composite material 38 of the fibre composite section 32. The second portions 36 of each of the metal sheets 33 is interleaved with the fibre composite material 38 in the transition section 31. In the example shown in Figure 5, the fibre composite material forms the outermost layer of the transition section 31. In an alternative example, the second portion 36 of the metal sheets 33 may form the outermost layer of the transition section 31.

The metal sheets 33 are thin relative to their spanwise dimension Y. For example, the thickness of the metal sheets 33 may be 3mm and their spanwise lengths may be 650mm. Preferably the thickness of the metal sheets 33 is no more than 25% of their spanwise dimension. More preferably, the thickness of the metal sheets 33 no greater than 10% of their spanwise dimension, more preferably still no greater than 5% of their spanwise dimension, further more preferably no greater than 1% of their spanwise dimension, and most preferably no greater than 0.1% of their spanwise dimension. It is envisioned that the thickness of the metal sheets 33 may be as low as 0.5mm, and that their spanwise dimension may be as low as 100mm. However, dimensions outside this range may be used provided that the thickness of the metal sheets 33 is no more than 25% of their spanwise dimension.

The metal sheets 33 may be formed from a continuous metal sheet which is wound in a spiral around a mandrel to form a tubular structure. Alternatively, the metal sheets 33 may comprise a plurality of metal sheets 33 positioned side by side and one on top of another to form a tubular structure. In this case, the metal sheets 33 may be offset with respect to one another around the periphery of the tubular structure so that the edges of the metal sheets 33 in one layer do not align with the ends of the metal sheets 33 in a neighbouring layer. The metal sheets 33 may be connected together by any suitable method such as by welding or by interlocking formations located on the spanwise edges of the metal sheets 33. Alternatively, the metal sheets 33 may be held in position by the fibre composite material 38 which encapsulates the second portions 36 of the metal sheets 33 located in the transition section 31.

As described above in relation to Figure 4, the preferred example of Figure 5 comprises a plurality of bolt holes 46 which extend through the metal section 30. The metal section 30 is connected to the outer ring 42 of the pitch bearing 40 by radially extending bolts 45.

As discussed above in respect of the example of Figure 4, a friction connection also exists between the inner surface 47 of the metal section 30 and the outer surface 50 of the outer ring 42. A friction connection also exists between the contacting surfaces of the plurality of metal sheets 33. As discussed above, the friction connections are created by the preloading of the bolts 45 when they are tightened.

In an alternative example, the metal section 30 may comprise a small amount composite material 38 located between one or more of the metal sheet layers, and/or on the outermost metal sheet layer, of the metal section 30. In this case, the cross-sectional area of the metal section 30 in a direction normal to a spanwise extending axis of the metal section 30 must comprise at least 90% metal to create and sustain the preloading of the bolts 45 throughout the operational life of the wind turbine blade 10. Preferably the cross-sectional area of the metal section 30 may comprise at least 95% metal, more preferably at least 98% metal, and most preferably at least 99% metal. As discussed above in respect of Figure 4, if the cross-sectional area of the metal section 30 comprises less than 90% metal, the connection method described above and shown in Figure 5 may still be used as the root 29 is still reliably secured to the outer ring 42 by the bolts 45 predominantly bearing loads in shear.

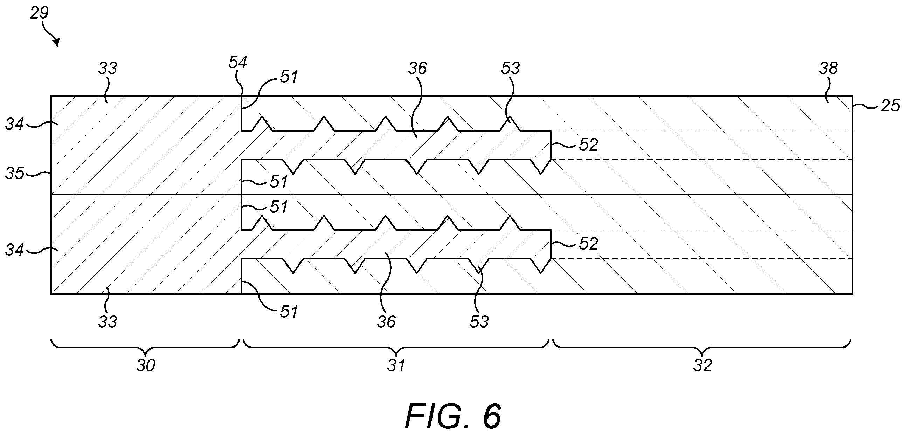

Figure 6 shows another example of the root 29 which is the same in all respects to the root 29 of Figure 5 except in that the cross-sectional profile of the metal sheets 33 in the transition section 31 differs from that of the example of Figure 5. As such, the example construction of Figure 6 is a preferred example of the example construction of Figure 5.

In the example of Figure 6, the first sections 34 of the metal sheets 33 may each have a constant thickness and textured second portions 36 which extend into the transition section 31.

In this example, the outer surfaces of the second portions 36 of the metal sheets 33 comprise a plurality of formations 53 which extend radially with respect to the spanwise extending axis of the metal section 30. The radially extending formations 53 comprise a plurality of discrete projections having generally spike like formation. It will be understood that the formations 53 could have any suitable form including cylindrical, rounded or square sided for example. In another example, the formations 53 may be formed by a roughening of the surfaces of the second portions 36 of the metal sheets 33. In another example, the formations 53 may comprise parallel or crossed grooves such as may be found on a file or a rasp.

The second portions 36 of the metal sheets 33 located in the transition section 30 are encapsulated within fibre composite material 38 which is continuous with the fibre composite material 38 of the fibre composite section 32 of the root 29. The second portions 36 are interleaved with the fibre composite material 38 in the transition section 31. The formations 53 help to improve the integrity of the connection between the fibre composite material 38 and the second portions 36 of the metal sheets 33. Nonetheless, it will be understood that the formations 53 are not essential and that some or all of the portions of the metal sheets 33 located in the transition section 31 may not comprise formations 53. Similarly, it is not necessary for each side of the second portions 36 comprise formations 53 and in some examples only one side of the second portions 36 may comprise formations 53.

In one example construction method, the depth of the fibre material may be matched to the depth of the steps 51 located in the metal sheets 33 at the spanwise outermost end 54 of the metal section 30, and to the depth of the spanwise outermost ends 52 of the second portions 36 so that during lay-up the fibre material may be readily interleaved with the second portions 36. For example, the steps 51 may have a depth of 0.5mm, the second portions 36 may have a depth of 0.5mm (excluding the formations 53), and the fibre material may have a depth of 0.5mm. However, this is not essential and any other suitable dimensions and lay-up method may be used.

The metal sheets 33 are thin relative to their spanwise dimensions. For example, the thickness of the metal sheets 33 may be 1.5mm at the proximal end 35 of the root 29 and their spanwise dimension may be 650mm.

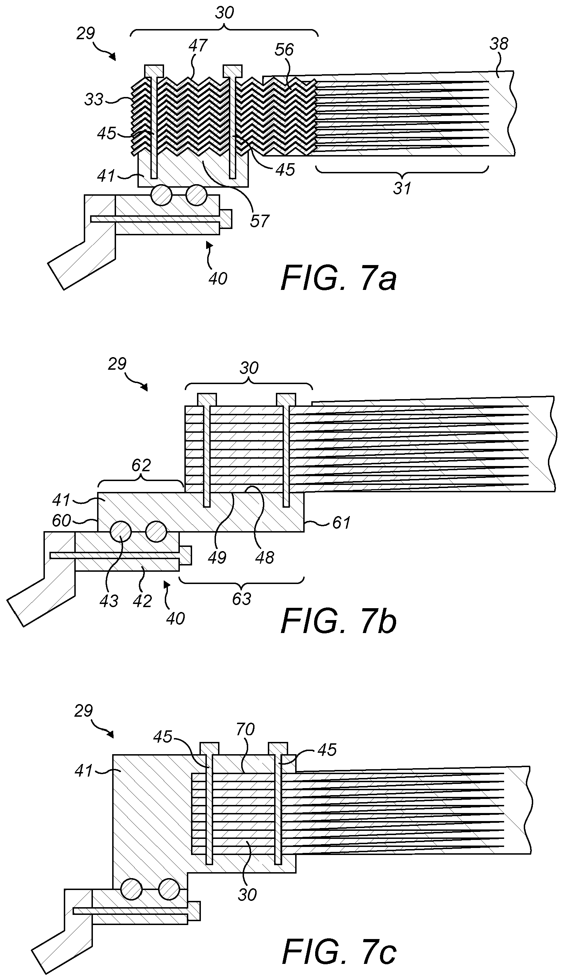

Figures 7a to 7c show schematic partial cross-sectional views of further example variations of the root construction of Figure 5. In the example of Figure 7a, the root 29 is attached to the inner ring 41 of the pitch bearing 40 in the same way as discussed above in respect of Figures 4 and 5. In this example, the metal sheets 33 of the metal section 30 comprise formations 56 which engage with complementary formations 56 located on an adjacent layer of metal sheet 33. In addition, the inner surface of the inner bearing ring 41 may comprise complementary surface formations 57 which engage with the surface formations 56 of the metal section 30.

The surface formations 56 provide an interlock between neighbouring layers of metal sheets 33 and between the outer surface of the metal portion 30 and the inner surface of the inner ring 41 of the pitch bearing. In the example shown in Figure 7a radially extending bolts 45 are shown connecting the metal portion 30 to the inner ring 41. However, the bolts 45 may be dispensed with, the connection between the root 29 and the inner ring 41 being provided entirely by the interlocking formations 56, 57.

In the example of Figure 7a the innermost surface 47 of the metal section 30 is shown as having formations 56 thereon. It will be understood that this surface may optionally not comprise formations 56.

The portions of the metal sheets 33 located in the transition section 31 of the root 29 as shown in Figure 7a may be the same as those shown and described above in respect of Figure 5. In an alternative example, the portions of the metal sheets 33 located in the transition section 31 may also comprise formations 56 to help improve the connection between the metal sheets 33 and the fibre composite material 38. The formations 56 in the metal section 30 and optionally in the transition section 31 may comprise discrete formations 53 as described above in relation to Figure 6, or may be continuous formations such as curves or waves. Alternatively, the formations 56 may be formed by a roughening of the surfaces of the metal sheets 33 (for example by grit/sand blasting). In another example, the formations 56 may comprise parallel or crossed grooves such as may be found on a file or a rasp.

In the example of Figure 7b, the root 29 is the same as described above with respect to Figure 5 and is attached to the inner ring 41 of the pitch bearing 40 by bolts 45 in the same way as discussed above in respect of Figures 4 and 5. In this example, the inner ring 41 is elongate and comprises a proximal end 60 defining a hubwards end of the inner bearing ring 41, and a distal end 61 located at a spanwise distance from the proximal end 60. A hubwards section 62 of the inner bearing ring 41 extends from the proximal end 60 towards the distal end 61, and a bladewards section 63 of the inner bearing ring 41 extends from the distal end 61 towards the proximal end 60.

The circumferential outer surface 48 of the metal section 30 is only in contact with the circumferential inner surface 49 of the inner ring 41 in the bladewards section 63 of the inner ring 41 such that the contacting circumferential surfaces 48, 49 are located entirely in the bladewards section 63. The hubwards section 62 of the inner ring 41 operably engages the outer ring 42 of the pitch bearing via bearing elements (e.g. spherical rollers) 43 located between the inner 41 and outer 42 rings of the pitch bearing 40. This arrangement helps to dissociate the loads transferred from the root 29 to the inner ring 41 from the bearing elements 43 thereby reducing the forces that they encounter in use.

The example of Figure 7c is similar to the example of Figure 7b except in that the inner bearing ring 41 comprises an annular groove 70 within which the metal section 30 of the root 29 is received. In this example the metal section 30 of the root 29 may be attached to the inner ring 41 by the bolts 45 alone (bearing the forces predominantly in shear), or the bolts 45 may be preloaded as described above to produce friction force between the plurality of layers and the circumferential outer surfaces of the metal section 30 and the circumferential inner surfaces of the groove 70.

In this example, and in all of the examples described above, the metal section 30 of the root 29 may be attached to the inner 41 or outer 42 ring of the pitch bearing 40 by a shrink fit connection in which the inner 41 or outer 42 ring is heated so that it expands, the metal end 30 of the root 29 is positioned within or around inner 41 or outer 42 ring (as appropriate), or in the groove 70, and the ring 41, 42 is allowed to cool so that a shrink fit connection is formed between the ring 41, 42 and the metal section 30 of the root 29. This may also be achieved by cooling the metal section 30 of the root 29 before positioning it in or around the ring 41, 42 and allowing it to warm back up. If a shrink fit connection is used, the bolts 45 may be dispensed with. Alternatively, the bolts 45 may be used for additional security.

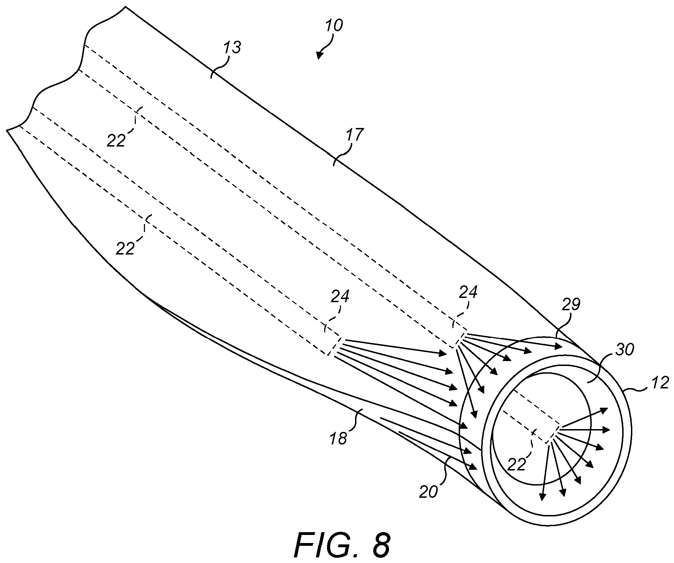

Referring now to Figure 8, a schematic view of a wind turbine blade 10 comprising a root 29 connected to a blade shell 13 is shown. The root 29 is configured as described above with reference to any one of Figures 4 to 7c. Because the metal section 30 of the root 29 is considerably stiffer than the glass fibre roots of the prior art, the spanwise innermost ends 24 of the carbon fibre spar caps 22 may be positioned closer to the root 29 than is possible in the prior art. Thus the stiffness of the entire wind turbine blade 10 is increased as the carbon fibre spars 22 are able to extend closer to the stiffer root 29. This is advantageous for the efficiency of the wind turbine blade 10. The metal section 30 of the root 29 is capable of bearing higher peak loads than is possible with the glass fibre roots of the prior art. This is advantageous as it allows less glass to be used in the construction of the root 29 providing both cost and environmental benefits.

In addition to these advantages, the root configurations described above have the added benefit in that the integrity of the bonds between the various layers of the root wall may be interrogated by ultrasonic non-destructive testing (NDT) methods throughout the entire depth of the root wall. This is not possible for roots comprising conventional spanwise extending bolt holes as the ultrasonic NDT equipment is unable to 'see' past the void formed in the glass fibre composite in which the insert for the stud bolt insert is received.

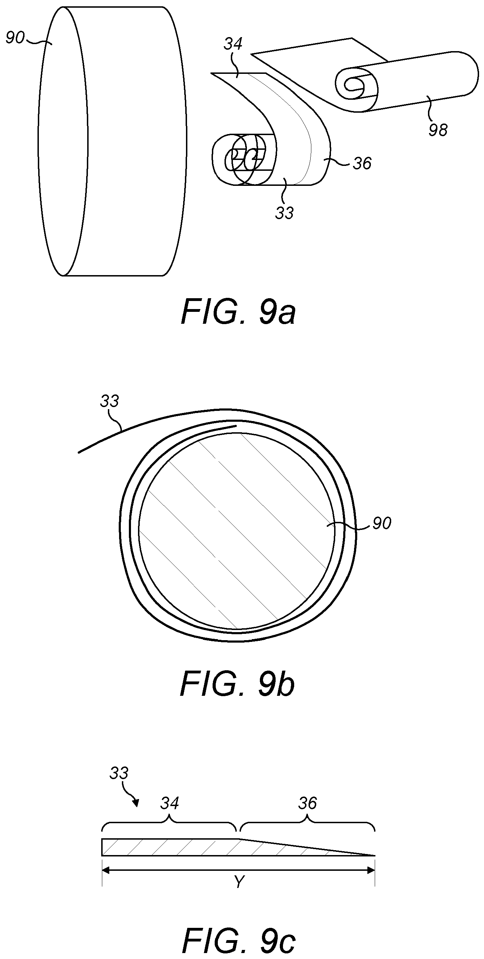

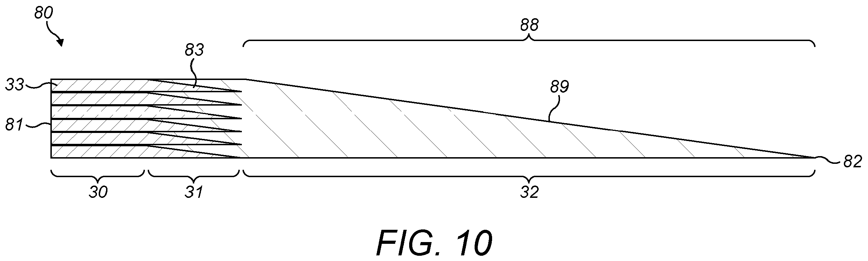

Figure 9a shows a schematic view of a method of manufacture for a root ring 80 (see Figure 10) and Figure 9b shows a schematic cross-sectional view of the manufacturing method of Figure 9a. Figure 10 shows a schematic cross-sectional view of a root ring 80 made by the method of Figures 9a and 9b.

As will be described in greater detail below, the root ring 80 is incorporated into the layup of the blade shell 13 to form the root 29 of the complete wind turbine blade 10. As such, root ring 80 comprises a hub end 81 and a tipwards end 82 (in relation to the location of the root ring 80 in the completed wind turbine blade 10), the root ring 80 extending in a spanwise direction from the hub end 81 to the tipwards end 82.

The root ring 80 is formed with a plurality of layers of metal sheets 33 arranged one on top of the other such that the root ring 80, when incorporated into the blade shell 13 forms a root 29 as described above in relation to Figures 5 to 7c. The completed root ring 80 comprises a metal section 30, a transition section 31 and a fibre composite section 32.

Referring to Figures 9a to 9c, the root ring 80 is fabricated on a mandrel 90 by interleaving and winding metal sheet material 33 and sheet fibre material 98 around a mandrel 90. Once wound onto the mandrel 90, the metal sheet material 33 forms the metal sheet layers of the root ring 80. Only the metal sheet material 33 is shown wound around the mandrel 90 in Figure 9b as the cross-section is taken through a plane of the mandrel 90 corresponding to the location at which the metal section 30 of the root ring 80 is formed.

As shown in Figure 9c, the metal sheet material 33 may comprise a first, constant thickness, portion 34 and a second, varying thickness portion, 36. The metal sheet material 33 is wound onto the mandrel 90 in layers so that the first portion 34 forms the metal section 30 of the root ring 80 and the second portion 36 is located in the transition section 31 of the root ring 80.

The metal sheet material 33 may have a thickness of 3mm throughout the first portion 34 and a spanwise dimension Y of 650mm. If, for example, ten layers of such metal sheet material 33 were wound onto the mandrel 90, the metal section 30 of the root ring 80 would have a radial depth of 30mm (relative to a spanwise extending axis of the root ring 80), and the transition section 31 would comprise eighteen to twenty metal to composite fibre interfaces 83 (depending on the material forming the outermost layer of the transition section 31).

In another example, the metal sheet material 33 may have a thickness of 0.5mm throughout the first portion 34 and a spanwise dimension Y of 650mm. If sixty layers of such metal sheet material 33 were wound onto the mandrel 90, the metal section 30 of the root ring 80 would have a radial depth of 30mm as before, but the transition section 31 would comprise six times the number of metal to composite fibre interfaces 83 as the previous example.

Mathematical modelling of the root ring 80 indicates that a root ring having six times the number of metal to composite fibre interfaces 83 would be six times stronger. Thus, the strength of the root ring 80 - and by association the root 29 of the completed wind turbine blade 10 - can be varied and tuned for specific applications by modification of the dimensions of the metal sheet material 33 and by selection of the number of layers in the root ring 80. This is advantageous as it allows for roots 29 of different strengths to be designed and made without needing to change the overall dimensions of the root. This is beneficial for the purposes of standardisation and overcoming design limitations imposed by road transport considerations (such as the height of bridges).

In addition to varying the dimensions of the metal sheet material 33 and the number of layers, the strength of the connection between root 29 and the pitch bearing 40 may be varied by changing the number and position of the radially extending bolts 45 (if used) and/or by varying the surface finish and interlocking formations (if present) of the metal sheets 33.

The method of winding the sheet materials 33, 98 on to the mandrel 90 is advantageous as it allows for multiple layers to be formed quickly without the need for large amounts of manual labour. In addition, all or part of the metal sheet material 33 may be roughened before being would onto the mandrel 90 to improve the bond between the metal sheet material 33 and the fibre composite material 38 in the finished root ring 80.

In one example, the metal sheet material 33 is overlapped with the sheet fibre material 98 before the overlapped sheets are wound on to the mandrel 90. In this way, once wound onto the mandrel 90, the metal sheet material 33 becomes interleaved with the sheet fibre material 98 in the completed root ring 80.

In another example, one layer of metal sheet material 33 is wound onto the mandrel 90 followed by one overlapping layer of the sheet fibre material 98 (or vice versa) so that the metal sheet material 33 becomes interleaved with the sheet fibre material 98 in the completed root ring 80.

In each case, the sheet fibre material 98 may overlap the metal sheet material 33 only in the vicinity of the second portion 36 of the metal sheet material 33 to form the transition section 31 of the root ring 80.

The sheet fibre material 98 may comprise pre-impregnated sheet fibre material. Alternatively, the sheet fibre material 98 may comprise dry sheet fibre material that is wound onto the mandrel 90 before being infused with resin and cured. With reference to Figure 10, it will be understood that before curing of the pre-impregnated sheet fibre material, or before infiltration and curing of the dry sheet fibre material, the section of the assembled but uncured root ring 80 extending from the transition section 31 to the tipwards end 82 of the root ring 80 may be referred to as fibre section 88. The fibre section 88 becomes the composite fibre section 32 once cured.

A tapered inner surface 89 of the fibre composite section 32 of the root ring 80 can be formed during the winding process by winding a greater thickness of sheet fibre material 98 onto the mandrel 90 proximate the transition section 31 than is wound onto the mandrel 90 proximate the tipwards end 82 of the root ring 80. The cured fibre composite section 32 of the root ring 80 can be machined to obtain improved dimensional accuracy if required. In an alternative example method, the fibre section 88 can be wound onto the mandrel 90 at full thickness (i.e. the same or similar to the thickness of the metal 30 and transition 31 sections), cured and then machined to provide any particular cross-sectional profile, including tapered, as required.

Any of the root configurations discussed above in relation to Figures 4 to 7c may be made in the way described above in relation to Figures 9a to 9c.

Once completed, the root ring 80 is removed from the mandrel 90 and incorporated into the blade shell 13 to form the root 29 of the complete wind turbine blade 10. In one example this may be done by cutting the root ring 80 in half and incorporating each half into the windward 17 and leeward 18 half-shells of the blade shell 13. In this method, the root ring halves are placed partially or fully into the hubwards ends 21 of the half-shells 17, 18, overlayed with fibre material and cured. The two half-shells 17, 18, including the root ring halves, are then connected together to form the complete wind turbine blade shell 13 with a complete root 29.

In an alternative example, the finished root ring 80 may be incorporated into the blade shell 13 in one piece by positioning the complete root ring 80 partially or fully into the hubwards ends 21 of the windward 17 and leeward 18 half-shells, and connecting the root ring 80 to the half-shells 17, 18 by overlaying with fibre material and curing. This may be done after the windward 17 and leeward 18 half-shells have been connected together to form the blade shell 13. Alternatively, the root ring 80 may be connected to one half-shell before the other-half shell is placed in position and connected to the root ring 80 by overlaying with fibre material and curing as before.

In all of the root ring connection methods described above, the overlying fibre material may be pre-impregnated fibre material or dry fibre material which is infiltrated with resin before curing.

In all of the examples described herein, the second portion 36 of the metal sheet or sheets 33 located in the transition section 31 of the root 29 or root ring 80 is either linearly tapered or predominantly of constant thickness (optionally with radially extending formations). It will be understood that the second portion 36 of the metal sheet or sheets 33 located in the transition section 31 of a blade root 29 or root ring 80 may have any suitable cross-sectional profile including curved. The second portion 36 of the metal sheet or sheets 33 located in the transition section 31 may taper from one side of the metal sheet 33 so that one side of the curve metal sheet 33 has a linear cross-section. Alternatively, the metal sheet or sheets 33 may taper from both sides towards a common apex.

The example constructions of root and root ring described above provide a number of advantages over the prior art. In particular, the strength and stiffness of the root/root ring can be tuned for specific applications by modification of the dimensions and profiles of the metal sheet material and/or of the number of layers of metal sheet material. Such modifications impact the strength, stiffness and number/surface area of the of metal to fibre composite interfaces contained in the root/root ring. Roots/root rings of different capacities may therefore be designed and made without needing to change the overall dimensions of the root/root ring. This is beneficial for the purposes of standardisation and overcoming design limitations imposed by road transport considerations (such as the height of bridges).

The strength of the connection between root and the pitch bearing may also be designed for purpose by changing the number and position of the bolts (if used), and/or by varying the surface finish and interlocking formations (if present) of the metal sheets.

Because the metal section of the root/root ring is considerably stiffer than the glass fibre roots of the prior art, the spanwise innermost ends of the carbon fibre spar caps within the blade shell may be positioned closer to the root than is possible in the prior art. Thus the stiffness of the entire wind turbine blade may be increased as the carbon fibre spar caps are able to extend closer to the stiffer root. In addition, the metal section of the root is capable of bearing higher peak loads than is possible with the glass fibre roots of the prior art meaning that less glass can be used in the construction of the root providing both cost and environmental benefits.

The root configurations described above also have the benefit that the integrity of the bonds between the various layers of the root/root ring may be interrogated by ultrasonic non-destructive testing (NDT) methods throughout the entire depth of the root wall. This is not possible for roots comprising conventional spanwise extending bolt holes as the ultrasonic NDT equipment is unable to 'see' past the void formed in the glass fibre composite in which the insert for the stud bolt insert is received.

The method of winding the sheet materials on to the mandrel is advantageous as it allows for multiple layers to be formed quickly without the need for large amounts of manual labour. In addition, all or part of the surface of the metal sheet material may be treated before being wound onto the mandrel to increase the friction between the layers of metal sheet material in the metal section, and to help improve the bond between the metal sheet material and the fibre composite material in the finished root ring. The surface treatment may comprise a mechanical roughening process such as grit blasting for example, and/or may comprises a chemical treatment process.

## Claims

1. An assembly for a wind turbine, the assembly comprising a wind turbine blade and a pitch bearing;
the wind turbine blade (10) having a root end (12), a tip end (11), a leading edge (14) and a trailing edge (16), the blade extending in a spanwise direction from the root end to the tip end, the blade comprising a tubular root portion having a proximal end (35) defining the root end of the blade, and a distal end (25) located at a spanwise distance from the proximal end, wherein the root portion comprises:
a metal section (30) which extends from the proximal end of the root portion towards the distal end of the root portion;
a fibre composite section (32) which extends from the distal end of the root portion towards the proximal end of the root portion; and
a transition section (31) which extends between the metal section and the fibre composite section,
wherein the metal section (30) comprises one or more metal sheets (33), a portion of one or more of which extend beyond the metal section into the transition section (31), wherein the portion of the one or more metal sheets located in the transition section is encapsulated within fibre composite material (38) which is continuous with fibre composite material of the fibre composite section (32),
wherein the metal section is connectable to an inner (41) or outer ring (42) of the pitch bearing (40) of a wind turbine hub (8), wherein a circumferential surface of the inner or outer ring is in contact with a circumferential surface of the metal section of the wind turbine blade.

2. The assembly of claim 1, wherein the cross-sectional area of the metal section (30) in a direction normal to a spanwise extending axis of the metal section comprises at least 90% metal, preferably at least 95% metal, more preferably at least 98% metal, and most preferably at least 99% metal.

3. The assembly of claim 1 or 2, wherein the one or more metal sheets (33) are thin in relation to their spanwise dimension (Y) in a direction parallel to the spanwise extending axis of the metal section such that the thickness of the one or more metal sheets is no greater than 25% of the spanwise dimension (Y), preferably no greater than 10% of the spanwise dimension (Y), more preferably no greater than 5% of the spanwise dimension (Y), still more preferably or no greater than 1% of the spanwise dimension (Y), and most preferably no greater than 0.1% of the spanwise dimension (Y).

4. The assembly of any preceding claim, wherein the portion of the one or more metal sheets (33) located in the transition section (31) tapers towards the fibre composite section (32).

5. The assembly of any preceding claim, wherein the portion of the one or more metal sheets (33) located in the transition section (31) comprises a plurality of radially extending formations (53) with respect to the spanwise extending axis of the metal section.

6. The assembly of claim 5, wherein the radially extending formations (53) comprise a plurality of projections located on the surface of the portion of the one or more metal sheets (33) located in the transition section (31).

7. The assembly of any preceding claim, wherein the metal section (30) comprises a continuous spiral of metal sheet material (33) curved to form a plurality of layers of metal sheet material.

8. The assembly of any preceding claim, wherein the metal section (30) comprises a plurality of layers of metal sheets (33) arranged one on top of another.

9. The assembly of claim 8, wherein each layer of metal sheet (33) comprises formations (53) which engage with complementary formations (56) located on an adjacent layer of metal sheet.

10. The assembly of claim 8 or 9, wherein a portion of some or all of the layers of metal sheet (33) extend beyond the metal section (30) into the transition section (31).

11. The assembly of claim 10, wherein each portion of the layers of metal sheet (33) which extend into the transition section (31) extend into the transition section by the same amount.

12. The assembly of claim 10, wherein each portion of the layers of metal sheet (33) which extend into the transition section (31) extend into the transition section by an amount different to a neighbouring portion of metal sheet.

13. The assembly of any preceding claim, wherein the fibre composite section tapers (32) towards the distal end (25) of the tubular root portion.

14. The assembly of any preceding claim, comprising a plurality of bolt holes (46) which extend radially with respect to the spanwise extending axis (28) of the metal section (30) through the metal section from an inner circumferential surface (47) of the metal section to an outer circumferential surface (48) of the metal section.

15. The assembly of any preceding claim, wherein the inner (41) or outer ring (42) comprises one or more parts connected together.

16. The assembly of any preceding claim, wherein the metal section (30) is connected to the inner (41) or outer ring (42) by a friction connection.

17. The assembly of claim 16, wherein the metal section (30) is connected to the inner (41) or outer ring (42) by a shrink fit connection.

18. The assembly of any preceding claim, comprising a plurality of bolts (45) which extend through the metal section (30) into the inner or outer ring.

19. The assembly of claims 18, wherein the bolts (45) extend radially with respect to the spanwise extending axis (28) of the metal section.

20. The assembly of any preceding claim, wherein the inner or outer ring (41, 42) comprises an annular groove (70) within which the metal section (30) is received.

21. The assembly of any preceding claim, wherein the circumferential surface of the inner or outer ring (41, 42) comprises surface formations which engage with complementary surface formations located on the circumferential surface of the metal section (30).

22. The assembly of any preceding claim, wherein the inner or outer ring (41, 42) comprises a proximal end (60) defining a hubwards end of the ring, and a distal end (61) located at a spanwise distance from the proximal end, wherein the ring comprises:
a hubwards section (62) which extends from the proximal end of the ring towards the distal end of the ring; and
a bladewards section (63) which extends from the distal end of the ring towards the proximal end of the ring;
wherein the circumferential surface (49) of the ring in contact with the circumferential surface (48) of the metal section (30) is located entirely in the bladewards section of the ring, and wherein the hubwards section of the ring is configured to operably engage the inner or outer ring of a pitch bearing.

23. A wind turbine comprising:
a hub (8);
a pitch bearing (40) connected to the hub; and
an assembly according to any preceding claim operably engaged with the inner or outer ring of the pitch bearing.

## Patentansprüche

1. Baugruppe für eine Windkraftanlage, wobei die Baugruppe ein Windkraftanlagenblatt und ein Blattwinkellager umfasst;
wobei das Windkraftanlagenblatt (10) ein Wurzelende (12), ein Spitzenende (11), eine Blattvorderkante (14) und eine Blatthinterkante (16) aufweist, wobei sich das Blatt in Spannweitenrichtung von dem Wurzelende zu dem Spitzenende erstreckt, wobei das Blatt einen rohrförmigen Wurzelabschnitt mit einem proximalen Ende (35), welches das Wurzelende des Blattes definiert, und einem distalen Ende (25) umfasst, welches sich in einem Abstand in Spannweitenrichtung von dem proximalen Ende befindet, wobei der Wurzelabschnitt umfasst:
einen Metallabschnitt (30), welcher sich von dem proximalen Ende des Wurzelabschnitts bis zu dem distalen Ende des Wurzelabschnitts erstreckt;
ein Faserverbundabschnitt (32), welcher sich von dem distalen Ende des Wurzelabschnitts zu dem proximalen Ende des Wurzelabschnitts erstreckt; und
ein Übergangsabschnitt (31), welcher sich zwischen dem Metallabschnitt und dem Faserverbundabschnitt erstreckt,
wobei der Metallabschnitt (30) eine oder mehrere Metallschichten (33) umfasst, von welchen sich ein Teil über den Metallabschnitt hinaus in den Übergangsabschnitt (31) hinein erstreckt, wobei der in dem Übergangsabschnitt befindliche Teil der einen oder mehreren Metallschichten in Faserverbundwerkstoff (38) eingeschlossen ist, welches mit dem Faserverbundwerkstoff des Faserverbundabschnitts (32) zusammenhängend ist.
wobei der Metallabschnitt mit einem Innenring (41) oder Außenring (42) des Blattwinkellagers (40) einer Windkraftanlagennabe (8) verbindbar ist, wobei eine Umfangsfläche des Innenrings oder Außenrings mit einer Umfangsfläche des Metallabschnitts des Windkraftanlagenblatts in Kontakt steht.

2. Baugruppe nach Anspruch 1, wobei die Querschnittsfläche des Metallabschnitts (30) in einer Richtung normal zu einer sich in Spannweitenrichtung erstreckenden Achse des Metallabschnitts zumindest 90 % Metall, bevorzugt zumindest 95 % Metall, bevorzugter zumindest 98 % Metall und besonders bevorzugt zumindest 99 % Metall umfasst.

3. Baugruppe nach Anspruch 1 oder 2, wobei die eine oder mehreren Metallschichten (33) im Verhältnis zu ihrer Ausdehnung in Spannweitenrichtung (Y) in einer Richtung parallel zu der sich in Spannweitenrichtung erstreckenden Achse des Metallabschnitts dünn sind, sodass die Dicke der einen oder mehreren Metallschichten nicht mehr als 25 % der Ausdehnung in Spannweitenrichtung (Y), bevorzugt nicht mehr als 10 % der Ausdehnung in Spannweitenrichtung (Y), bevorzugter nicht mehr als 5 % der Ausdehnung in Spannweitenrichtung (Y), noch bevorzugter nicht mehr als 1 % der Ausdehnung in Spannweitenrichtung (Y) und besonders bevorzugt nicht mehr als 0,1 % der Ausdehnung in Spannweitenrichtung (Y) beträgt.

4. Baugruppe nach einem vorstehenden Anspruch, wobei sich der in dem Übergangsabschnitt (31) befindliche Teil der einen oder mehreren Metallschichten (33) zu dem Faserverbundabschnitt (32) hin verjüngt.

5. Baugruppe nach einem vorstehenden Anspruch, wobei der in dem Übergangsabschnitt (31) befindliche Teil der einen oder mehreren Metallschichten (33) eine Vielzahl von sich in Bezug auf die sich in Spannweitenrichtung erstreckende Achse des Metallabschnitts radial erstreckenden Formationen (53) umfasst.

6. Baugruppe nach Anspruch 5, wobei die sich radial erstreckenden Formationen (53) eine Vielzahl von Vorsprüngen umfassen, welche sich auf der Oberfläche des Teils der einen oder mehreren Metallschichten (33) befinden, welche sich in dem Übergangsabschnitt (31) befinden.

7. Baugruppe nach einem vorstehenden Anspruch, wobei der Metallabschnitt (30) eine durchgehende Spirale aus Metallschichtmaterial (33) umfasst, welche so gekrümmt ist, dass sie eine Vielzahl von Lagen aus Metallschichtmaterial bildet.

8. Baugruppe nach einem vorstehenden Anspruch, wobei der Metallabschnitt (30) eine Vielzahl von übereinander angeordneten Lagen von Metallschichten (33) umfasst.

9. Baugruppe nach Anspruch 8, wobei jede Lage aus Metallschicht (33) Formationen (53) umfasst, welche mit komplementären Formationen (56) auf einer angrenzenden Lage aus Metallschicht in Eingriff stehen.

10. Baugruppe nach Anspruch 8 oder 9, wobei sich ein Teil einiger oder aller Lagen der Metallschicht (33) über den Metallabschnitt (30) hinaus in den Übergangsabschnitt (31) erstreckt.

11. Baugruppe nach Anspruch 10, wobei sich jeder Teil der Lagen aus Metallschicht (33), welche sich in den Übergangsabschnitt (31) hinein erstrecken, um den gleichen Betrag in den Übergangsabschnitt hinein erstreckt.

12. Baugruppe nach Anspruch 10, wobei sich jeder Teil der Lagen aus Metallschichten (33), welche sich in den Übergangsabschnitt (31) hinein erstrecken, um einen Betrag in den Übergangsabschnitt hinein erstreckt, welcher sich von einem benachbarten Teil der Metallschicht unterscheidet.

13. Baugruppe nach einem vorstehenden Anspruch, wobei sich der Faserverbundabschnitt (32) zu dem distalen Ende (25) des rohrförmigen Wurzelabschnitts hin verjüngt.

14. Baugruppe nach einem vorstehenden Anspruch, umfassend eine Vielzahl von Bolzenlöchern (46), welche sich in Bezug auf die in Spannweitenrichtung erstreckende Achse (28) des Metallabschnitts (30) durch den Metallabschnitt von einer inneren Umfangsfläche (47) des Metallabschnitts zu einer äußeren Umfangsfläche (48) des Metallabschnitts radial erstrecken.

15. Baugruppe nach einem vorstehenden Anspruch, wobei der Innenring (41) oder Außenring (42) einen oder mehrere miteinander verbundene Teile umfasst.

16. Baugruppe nach einem vorstehenden Anspruch, wobei der Metallabschnitt (30) mit dem Innenring (41) oder Außenring (42) durch eine Reibungsverbindung verbunden ist.

17. Baugruppe nach Anspruch 16, wobei der Metallabschnitt (30) mit dem Innenring (41) oder Außenring (42) durch eine Schrumpfverbindung verbunden ist.

18. Baugruppe nach einem vorstehenden Anspruch, umfassend eine Vielzahl von Bolzen (45), welche sich durch den Metallabschnitt (30) in den Innenring oder Außenring erstrecken.

19. Baugruppe nach Ansprüchen 18, wobei sich die Bolzen (45) in Bezug auf die sich in Spannweitenrichtung erstreckende Achse (28) des Metallabschnitts radial erstrecken.

20. Baugruppe nach einem vorstehenden Anspruch, wobei der Innenring oder Außenring (41, 42) eine ringförmige Nut (70) umfasst, in welcher der Metallabschnitt (30) aufgenommen ist.

21. Baugruppe nach einem vorstehenden Anspruch, wobei die Umfangsfläche des Innenrings oder Außenrings (41, 42) Oberflächenformationen umfasst, welche mit auf der Umfangsfläche des Metallabschnitts (30) befindlichen komplementären Oberflächenformationen in Eingriff stehen.

22. Baugruppe nach einem vorstehenden Anspruch, wobei der Innenring oder Außenring (41, 42) ein proximales Ende (60), welches ein nabenwärts gerichtetes Ende des Rings definiert, und ein distales Ende (61) umfasst, welches sich in einem Abstand in Spannweitenrichtung von dem proximalen Ende befindet, wobei der Ring umfasst:
einen nabenwärts gerichteten Abschnitt (62), welcher sich von dem proximalen Ende des Rings zu dem distalen Ende des Rings erstreckt; und
einen blattwärts gerichteten Abschnitt (63), welcher sich von dem distalen Ende des Rings zu dem proximalen Ende des Rings erstreckt;
wobei die Umfangsfläche (49) des Rings, welche mit der Umfangsfläche (48) des Metallabschnitts (30) in Kontakt steht, vollständig in dem blattwärts gerichteten Abschnitt des Rings liegt, und wobei der nabenwärts gerichtete Abschnitt des Rings so konfiguriert ist, dass er mit dem Innenring oder Außenring eines Blattwinkellagers funktionsfähig in Eingriff kommt.

23. Windkraftanlage, umfassend:
eine Nabe (8);
ein mit der Nabe verbundenes Blattwinkellager (40); und
eine Baugruppe nach einem vorstehenden Anspruch, welche mit dem Innenring oder Außenring des Blattwinkellagers funktionsfähig in Eingriff kommt.

## Revendications

1. Ensemble pour une éolienne, l'ensemble comprenant une pale d'éolienne et un palier de calage ;
la pale d'éolienne (10) présentant une extrémité de racine (12), une extrémité de pale (11), un bord d'attaque (14) et un bord de fuite (16), la pale s'étendant dans le sens de l'envergure depuis l'extrémité de racine jusqu'à l'extrémité de pale, la pale comprenant une partie de racine tubulaire présentant une extrémité proximale (35) définissant l'extrémité de racine de la pale, et une extrémité distale (25) située à une distance dans le sens de l'envergure par rapport à l'extrémité proximale, dans lequel la partie de racine comprend :
une section métallique (30) qui s'étend depuis l'extrémité proximale de la partie de racine vers l'extrémité distale de la partie de racine ;
une section composite en fibres (32) qui s'étend depuis l'extrémité distale de la partie de racine vers l'extrémité proximale de la partie de racine ; et
une section de transition (31) qui s'étend entre la section métallique et la section composite en fibres,
dans lequel la section métallique (30) comprend une ou plusieurs feuilles métalliques (33), dont une partie s'étend au-delà de la section métallique dans la section de transition (31), dans lequel la partie des une ou plusieurs feuilles métalliques située dans la section de transition est encapsulée dans un matériau composite en fibres (38) qui est continu avec le matériau composite en fibres de la section composite en fibres (32),
dans lequel la section métallique peut être reliée à une bague interne (41) ou externe (42) du palier de calage (40) d'un moyeu d'éolienne (8), dans lequel une surface circonférentielle de la bague interne ou externe est en contact avec une surface circonférentielle de la section métallique de la pale de l'éolienne.

2. Ensemble selon la revendication 1, dans lequel la superficie de section de la section métallique (30) dans une direction normale à un axe s'étendant dans le sens de l'envergure de la section métallique comprend au moins 90 % de métal, de préférence au moins 95 % de métal, plus préférentiellement au moins 98 % de métal et le plus préférentiellement au moins 99 % de métal.

3. Ensemble selon la revendication 1 ou 2, dans lequel les une ou plusieurs feuilles métalliques (33) sont minces par rapport à leur dimension dans le sens de l'envergure (Y) dans une direction parallèle à l'axe d'extension dans le sens de l'envergure de la section métallique de telle sorte que l'épaisseur des une ou plusieurs feuilles métalliques soit inférieure ou égale à 25 % de la dimension dans le sens de l'envergure (Y), de préférence inférieure ou égale à 10 % de la dimension dans le sens de l'envergure (Y), plus préférentiellement inférieure ou égale à 5 % de la dimension dans le sens de l'envergure (Y), toujours plus préférentiellement ou inférieure ou égale à 1% de la dimension dans le sens de l'envergure (Y), et le plus préférentiellement inférieure ou égale à 0,1 % de la dimension dans le sens de l'envergure (Y).

4. Ensemble selon une quelconque revendication précédente, dans lequel la partie des une ou plusieurs feuilles métalliques (33) située dans la section de transition (31) s'effile vers la section composite en fibres (32).

5. Ensemble selon une quelconque revendication précédente, dans lequel la partie des une ou plusieurs feuilles métalliques (33) située dans la section de transition (31) comprend une pluralité de formations s'étendant radialement (53) par rapport à l'axe d'extension dans le sens de l'envergure de la section métallique.

6. Ensemble selon la revendication 5, dans lequel les formations s'étendant radialement (53) comprennent une pluralité de saillies situées sur la surface de la partie des une ou plusieurs feuilles métalliques (33) situées dans la section de transition (31).

7. Ensemble selon une quelconque revendication précédente, dans lequel la section métallique (30) comprend une spirale continue de matériau de feuille métallique (33) incurvée pour former une pluralité de couches de matériau de feuille métallique.

8. Ensemble selon une quelconque revendication précédente, dans lequel la section métallique (30) comprend une pluralité de couches de feuilles métalliques (33) agencées les unes sur les autres.

9. Ensemble selon la revendication 8, dans lequel chaque couche de feuille métallique (33) comprend des formations (53) qui viennent en prise avec des formations complémentaires (56) situées sur une couche de feuille métallique adjacente.

10. Ensemble selon la revendication 8 ou 9, dans lequel une partie de certaines, ou de la totalité, des couches de feuille métallique (33) s'étend au-delà de la section métallique (30) dans la section de transition (31).

11. Ensemble selon la revendication 10, dans lequel chaque partie des couches de feuille métallique (33) qui s'étendent dans la section de transition (31), s'étend dans la section de transition de la même quantité.

12. Ensemble selon la revendication 10, dans lequel chaque partie des couches de feuille métallique (33) qui s'étendent dans la section de transition (31), s'étend dans la section de transition d'une quantité différente de celle d'une partie voisine de feuille métallique.

13. Ensemble selon une quelconque revendication précédente, dans lequel la section composite en fibres (32) s'effile vers l'extrémité distale (25) de la partie de racine tubulaire.

14. Ensemble selon une quelconque revendication précédente, comprenant une pluralité de trous de boulon (46) qui s'étendent radialement par rapport à l'axe d'extension dans le sens de l'envergure (28) de la section métallique (30) à travers la section métallique depuis une surface circonférentielle interne (47) de la section métallique jusqu'à une surface circonférentielle externe (48) de la section métallique.

15. Ensemble selon une quelconque revendication précédente, dans lequel la bague interne (41) ou externe (42) comprend une ou plusieurs parties reliées entre elles.

16. Ensemble selon une quelconque revendication précédente, dans lequel la section métallique (30) est reliée à la bague interne (41) ou externe (42) par une liaison par friction.

17. Ensemble selon la revendication 16, dans lequel la section métallique (30) est reliée à la bague interne (41) ou externe (42) par une liaison par ajustement serré.

18. Ensemble selon une quelconque revendication précédente, comprenant une pluralité de boulons (45) qui s'étendent à travers la section métallique (30) dans la bague interne ou externe.

19. Ensemble selon la revendication 18, dans lequel les boulons (45) s'étendent radialement par rapport à l'axe d'extension dans le sens de l'envergure (28) de la section métallique.

20. Ensemble selon une quelconque revendication précédente, dans lequel la bague interne ou externe (41, 42) comprend une rainure annulaire (70), à l'intérieur de laquelle la section métallique (30) est reçue.

21. Ensemble selon une quelconque revendication précédente, dans lequel la surface circonférentielle de la bague interne ou externe (41, 42) comprend des formations de surface qui viennent en prise avec des formations de surface complémentaires situées sur la surface circonférentielle de la section métallique (30).

22. Ensemble selon une quelconque revendication précédente, dans lequel la bague interne ou externe (41, 42) comprend une extrémité proximale (60) définissant une extrémité dans le sens du moyeu de la bague, et une extrémité distale (61) située à une distance dans le sens de l'envergure depuis l'extrémité proximale, dans lequel la bague comprend :
une section dans le sens du moyeu (62) qui s'étend depuis l'extrémité proximale de la bague vers l'extrémité distale de la bague ; et
une section dans le sens de la pale (63) qui s'étend depuis l'extrémité distale de la bague vers l'extrémité proximale de la bague ;
dans lequel la surface circonférentielle (49) de la bague en contact avec la surface circonférentielle (48) de la section métallique (30) est située entièrement dans la section dans le sens de la pale de la bague et dans lequel la section dans le sens du moyeu de la bague est configurée pour venir en prise de manière fonctionnelle avec la bague interne ou externe d'un palier de calage.

23. Éolienne comprenant :
un moyeu (8) ;
un palier de calage (40) relié au moyeu ; et
un ensemble selon une quelconque revendication précédente mis en prise de manière fonctionnelle avec la bague interne ou externe du palier de calage.
